# EUROPEAN PATENT APPLICATION

(11) **EP 1 693 146 A1**
(43) Date of publication of application: **23.08.2006**
(21) Application number: 04799704.4
(22) Date of filing: 10.11.2004
(51) Int. Cl.: B23Q 11/00

(54) **DEEP HOLE BORING METHOD AND DEVICE**

(30) Priority: 11.11.2003 JP 2003381614
(71) Applicant: Makino J. Co. Ltd., Aiko-gun, Kanagawa 2430303 (JP)
(72) Inventor: Suzuki, Masaharu;, Aiko-gun, Kanagawa;2430303 (JP)
(74) Representative: Thum, Bernhard
(86) International application number: PCT/JP2004/017027
(87) International publication number: WO 2005/044511

(57) **Abstract**

A tool T such as a drill, a reamer or an end mill, formed with a through hole extending along an axis O is mounted to a tool holder 10. A pressurized gas, at 1.5 to 5 MPa, is supplied to the through hole by way of the tool holder 10, and deep-hole machining is carried out while the pressurized gas or a machining liquid in mist form is ejected from the forward end of the tool T.

## Description

### TECHNICAL FIELD

The present invention relates to a deep-hole machining method and a deep-hole machining apparatus for carrying out the deep-hole machining method.

### BACKGROUND ART

Generally, cutting processes include dry machining and wet machining in which a pressurized gas or a machining liquid is supplied to a machining area between a tool and a workpiece to cool and lubricate a cutting edge of the tool and the workpiece or remove cutting chips from the machining area. Also, use of a semi-dry machining or a MQL (minimum quantity lubrication) machining (hereinafter referred to as a mist machining), in which a machining liquid is dispersed in the gas flow and atomized into mist so that the machining liquid in mist form is supplied to the machining area in order to minimize the amount of the machining liquid used, has become popular. In conventional mist machining, a mist generating unit is disposed near a machine tool to disperse a machining liquid into mist form in a gas flow, and the resulting machining liquid in mist form is supplied to the machining area through a mist supply passage provided in an interior of a spindle of a machine tool or on the outside of a housing for rotatably supporting the spindle.

Japanese Unexamined Patent Publication No. 2002-137145, for example, discloses a tool holder configured of a shank having a tapered portion for contacting a tapered hole formed at a forward end of a spindle and a tool mounting hole formed at the other end far from the tapered portion for fitting a tool therein, a tank provided removably around the shank for storing the machining liquid therein, and a machining liquid supply means for supplying the machining liquid stored in the tank to the machining area between the workpiece and the tool fitted in the tool mounting hole.

### DISCLOSURE OF THE INVENTION

If the tool holder disclosed in Japanese Unexamined Patent Publication No. 2002-137145 is used, the machining liquid in mist form can be generated near the machining area and, therefore, a problem of the machining liquid attaching to the inner wall of the intermediate portion of the mist supply passage or the mists being combined with each other into large mist particles will be solved. However, in the case where a hole in a workpiece is machined by a tool formed with a through hole for supplying mists therethrough, the depth of the machining hole, if not less than 50 times the tool diameter, poses a problem that cutting chips are clogged in the machining hole to make the machining impossible. Especially, this problem becomes conspicuous in the case where a deep hole having a depth of not less than 50 times the tool diameter is machined using a small-diameter tool of 1 to 3 mm. Also, if the machining liquid under high pressure is applied into the through hole of the small-diameter tool, a large conduit resistance would cause a pressure drop and would make satisfactory deep-hole machining impossible.

The technical subject of the present invention is to solve the problems of the prior art and the object thereof is to provide a deep-hole machining method and apparatus which can machine a deep hole having a depth of not less than 50 times the tool diameter.

According to the present invention, the problems of the prior art are solved by ejecting an air for atomization under high pressure from the forward end of the tool.

Specifically, according to the present invention, there is provided a deep-hole machining method for using a tool, such as a drill, a reamer or an end mill, to machine, in a workpiece, a hole having a depth not less than 50 times a diameter of the tool, which includes the steps of: mounting, to a tool holder, the tool formed with a through hole extending in an axial direction; supplying a pressurized gas, at 1.5 to 5 MPa, to the through hole by way of the tool holder; and machining a deep hole while the pressurized gas is ejected from the forward end of the tool.

Further, according to the present invention, there is provided a deep-hole machining apparatus for using a tool such as a drill, a reamer or an end mill formed with a through hole extending in an axial direction to machine, in a workpiece, a hole having a depth not less than 50 times a diameter of the tool, which includes: a tool holder for holding the tool and including a tank for storing a machining liquid therein and an atomization means for atomizing the machining liquid stored in the tank by the action of a pressurized gas thereby to supply the atomized machining liquid to the through hole of the tool; a gas supply conduit for supplying the pressurized gas to the tool holder; and a gas pressure boosting means for supplying the pressurized gas, at 1.5 to 5 MPa, to the gas supply conduit.

According to the present invention, the deep-hole machining is carried out while supplying the pressurized gas, at 1.5 to 5 MPa, to the through hole by way of the tool holder and the pressurized gas is ejected from the forward end of the tool. Therefore, the pressurized gas can be supplied into the forward end of the deep hole formed in the workpiece and having a depth not less than 50 times the diameter of the tool, and the cutting chips are prevented from being clogged in the deep hole to make satisfactory deep-hole machining possible.

Further, in the deep-hole machining apparatus according to the present invention, the machining liquid is atomized by the action of the pressurized gas, at 1.5 to 5 MPa, and the deep-hole machining is carried out while the atomized machining liquid is ejected from the forward end of the tool. Therefore, the machining liquid in mist form can be supplied, together with the pressurized gas, into the forward end of the deep hole formed in the workpiece and having the depth not less than 50 times the tool diameter. As a result, the machining liquid can be effectively supplied into the deep hole while, at the same time, the clogging of the cutting chips is prevented, thereby making the satisfactory deep-hole machining possible. In this way, the speed of the deep-hole machining is improved and the life of the tool is lengthened.

### BRIEF DESCRIPTION OF THE DRAWINGS

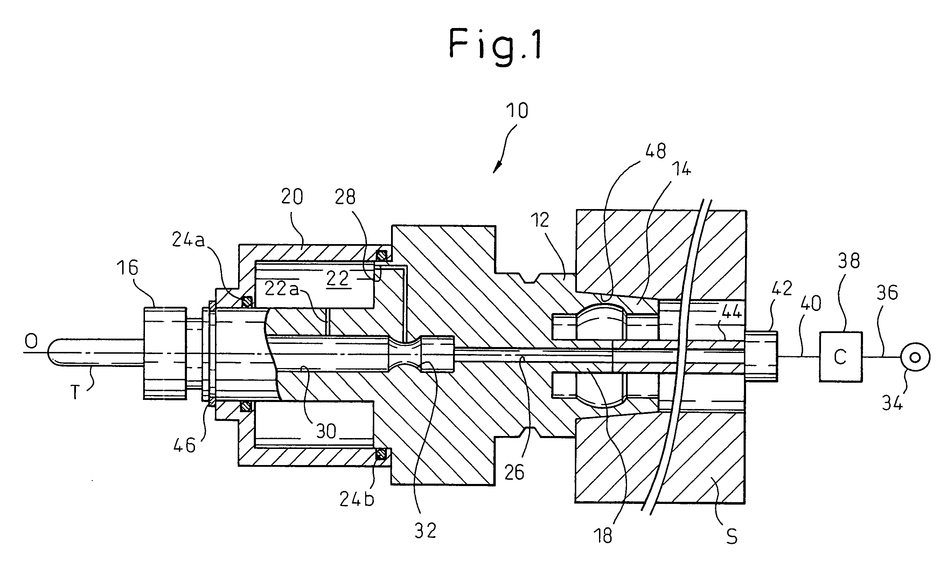

Fig. 1 is a cross-sectional view showing a tool holder forming a part of a deep-hole machining apparatus according to the present embodiment.

### BEST MODE FOR CARRYING OUT THE INVENTION

A preferred embodiment of the present invention will be described below with reference to the accompanying drawing.

A deep-hole machining apparatus according to this embodiment includes a tool holder 10 having a tool T such as a drill, a reamer or an end mill formed with a through hole extending in an axial direction thereof and mounted to a forward end of a spindle S of a machine tool, and a pressure booster 38 serving as a gas pressure boosting means for increasing pressure of gas supplied to the tool holder 10. This machine tool may be a NC drilling machine or a machining center for machining a workpiece (not shown) with a tool T by moving the tool T and the workpiece relative to each other in three orthogonal directions along X-, Y- and Z-axes. The spindle S of the machine tool is formed with a pressurized gas supply conduit 44 extending along a center axis O of the spindle S for supplying a pressurized gas to the tool holder 10 through the interior thereof. The rear end of the pressurized gas supply conduit 44 is coupled to a rotary joint 42 provided at the rear end of the spindle S, and the rotary joint 42 is in turn connected to an output end or an outlet port of the pressure booster 38 through a conduit 40.

The pressure booster 38 may be a compressor of reciprocal type, rotary type, centrifugal type or axial flow type capable of supplying a pressurized gas at 1.5 to 5 MPa. Also, when a pressurized air is supplied as the pressurized gas, the pressure booster 38 can be supplied with the air through a conduit 36 from a service air source 34 in a factory or the like. When a gas such as nitrogen, argon or gas other than the air is used as the pressurized gas, such a gas may be supplied from a cylinder (not shown) filled with such a gas.

In Fig. 1, the tool holder 10 includes a shank 12, and a hollow tapered portion 14 formed at the tail end of the shank 12 for fitting the tool holder 10 in a tapered hole 48 formed at the forward end of the spindle S. The shank 12 is formed at the forward end 16 thereof with a tool mounting hole (not shown), in which a tool to be used is fitted. The shank 12 has formed therein an air passage for ejecting a pressurized gas toward a machining area. In this embodiment, the air passage includes a pressurized gas inlet passage 26 and an outlet passage 30. The tapered portion 14 is provided in the hollow portion with a pressurized gas inlet portion 18 projecting toward the tail end along the center axis O of the shank 12. The pressurized gas inlet portion 18 is adapted to be hermetically coupled to a forward end of the pressurized gas supply conduit 44 of the spindle S when the tool holder 10 is mounted to the forward end of the spindle S.

A tank 20 is provided around an outer peripheral portion adjacent to the forward end 16 of the shank 12. The tank 20 is configured of a cylindrical member and is removably mounted on the shank 12 with a C-shaped stop ring 46 by sliding it in an axial direction, so that an internal space 22 is formed between the inner surface of the tank 20 and the outer surface of the shank 12 and the machining liquid can be stored in the internal space 22. The shank 12 is formed with an air hole 22a connecting the inner space 22 of the tank 20 with the outlet passage 30. Seal members such as O-rings 24a, 24b may be disposed to improve liquid-tightness between the tank 20 and the shank 12. The shank 12 further has a machining liquid supply passage 28 formed to connect the internal space 22 of the tank 20 with the outlet passage 30. The machining liquid supply passage 28 is formed so as to be open to a choke 32 formed in the outlet passage 30. When the spindle having the tool holder 10 mounted thereto is rotated, the machining liquid stored in the internal space 22 of the tank 20 is forced against the inner wall of the tank 20 by the action of the centrifugal force. Therefore, the machining liquid supply passage 28 is preferably formed at the outer peripheral edge of the shank 12 or in a portion adjacent thereto.

The operation of this embodiment will be described below. In the machine tool such as a NC drilling machine or a machining center, the spindle S having the tool holder 10 mounted thereto is rotated, and the pressure booster 38 is actuated to supply the pressurized gas to the pressurized gas inlet portion 18 through the pressurized gas supply conduit 44 of the spindle S. This pressurized gas is supplied from the pressurized gas inlet portion 18 to the outlet passage 30 through the pressurized gas inlet passage 26 formed in the shank 12. The pressurized gas supplied to the outlet passage 30 is accelerated at the choke 32 formed in the outlet passage 30 thereby to be reduced in pressure. Due to this reduction in pressure, the machining liquid in the tank 20 is sucked into the outlet passage 30 through the machining liquid inlet passage 28. The pressure reduction in the internal space 22 is compensated for by the air sucked into the internal space 22 from the air hole 22a. The machining liquid supplied to the choke 32 of the outlet passage 30 through the machining liquid supply passage 28 is atomized by the shearing force of the accelerated pressurized gas and is entrained in the pressurized gas flow as a machining liquid in mist form. In this way, the machining liquid in mist form is ejected toward the machining area outside of the shank 12 through the outlet passage 30.

The outlet opening (not shown) of the outlet passage 30 at the forward end 16 of the shank 12 can be formed, for example, around the tool mounted to the forward end 16 in such a manner as to eject the machining liquid in mist form toward the machining area. Also, the machining liquid in mist form can be supplied from the forward end of the tool to the machining area, if the tool mounting hole (not shown) formed at the forward end 16 of the shank 12 is in communication with the outlet passage 30 and a pressurized gas ejection passage is formed along the center axis from the rear end of the tool fitted in the tool mounting hole to the forward end thereof.

Even in the case where hole machining is carried out while supplying only the pressure-boosted pressured air to the through hole of the tool T without storing the machining liquid in the tank 20, a deep hole, that cannot be machined in the prior art, can be machined. When the machining liquid is stored in the tank 20 and the hole machining is carried out while supplying the mist generated by the pressure-boosted pressured air to the through hole of the tool T, the speed of the deep-hole machining is improved and a tool life is lengthened. This is because, in the prior art, the cutting chips were accumulated between cutting edges of the tool, while in the present invention, the cutting chips can be positively discharged from the deep hole during the machining. At the same time, the spindle load on the machine tool is reduced, thereby effectively reducing the change between before and after the machining of a multiplicity of holes. This effect is especially conspicuous in the case where a hole having a depth, of 100 to 300 mm, and not less than 50 times the tool diameter, is machined using a tool having a diameter of 1 to 3 mm.

As an alternative, an ordinary tool holder having a through hole may be used instead of the tool holder 10 according to this embodiment, the ordinary tool holder with a tool T having a through hole being mounted thereto may be fitted in the tapered hole 48 of the spindle S and a pressurized gas of 1.5 to 5 MPa may be supplied from the pressurized gas supply conduit 44, to thereby carry out the hole machining while ejecting the machining liquid from the forward end of the tool T. Also in this case, a hole having a depth not less than 50 times the diameter of the tool T can be machined.

## Claims

1. A deep-hole machining method for using a tool such as a drill, a reamer or an end mill to machine, in a workpiece, a hole having a depth not less than 50 times a diameter of the tool, said method comprising steps of:
mounting, to a tool holder, the tool formed with a through hole extending in an axial direction;
supplying a pressurized gas, at 1.5 to 5 MPa, to the through hole by way of the tool holder; and
machining a deep hole while the pressurized gas is ejected from a forward end of the tool.

2. The deep-hole machining method according to claim 1, wherein the tool holder comprises a tank for storing a machining liquid therein, and an atomization means for atomizing the machining liquid stored in the tank by the action of the supplied pressurized gas; and
wherein deep-hole machining is carried out while the atomized machining liquid is ejected from the forward end of the tool.

3. A deep-hole machining apparatus for using a tool such as a drill, a reamer or an end mill formed with a through hole extending in an axial direction to machine, in a workpiece, a hole having a depth not less than 50 times a diameter of the tool, said deep-hole machining apparatus comprising:
a tool holder for holding the tool and including a tank for storing a machining liquid therein and an atomization means for atomizing the machining liquid stored in the tank by the action of a pressurized gas thereby to supply the atomized machining liquid to the through hole of the tool;
a gas supply conduit for supplying the pressurized gas to the tool holder; and
a gas pressure boosting means for supplying the pressurized gas, at 1.5 to 5 MPa, to the gas supply conduit.
